## Europäisches Patentamt
## European Patent Office
## Office européen des brevets

(19)

(11) Publication number: **0 018 109**
**B1**

(12) **EUROPEAN PATENT SPECIFICATION**

(45) Date of publication of patent specification: **09.05.84**

(51) Int. Cl.³: **C 03 C 13/00, C 03 C 3/08, G 02 B 5/14**

(21) Application number: **80300952.1**

(22) Date of filing: **27.03.80**

(54) Improvements in or relating to graded index optical fibre.

(30) Priority: **10.04.79 GB 7912651**

(43) Date of publication of application:
**29.10.80 Bulletin 80/22**

(45) Publication of the grant of the patent:
**09.05.84 Bulletin 84/19**

(84) Designated Contracting States:
**AT BE CH DE FR GB IT NL SE**

(56) References cited:
**GB - A - 1 391 670**
**GB - A - 2 002 341**
**US - A - 3 859 103**
**US - A - 3 957 342**
**US - A - 4 145 200**

**AMERICAN CERAMIC SOCIETY BULLETIN, vol. 58, no. 3, March 1979, COLUMBUS, Ohio (US) K.J. BEALES et al.: "Preparation of Low Loss Graded-Index and High Na Step-Index Compound Glass Fiber by the Double-Crucible Technique", page 378, column 2, abstract 38-G-79**

(73) Proprietor: **THE POST OFFICE**
**23 Howland Street**
**London W1P 6HQ (GB)**

(72) Inventor: **Beales, Keith John**
**8 Stella Maris, Hadleigh Road**
**Ipswich Suffolk (GB)**
Inventor: **Duncan, William James**
**34 Birchwood Drive**
**Rushmere St. Andrews Ipswich Suffolk (GB)**
Inventor: **Dunn, Anthony Gladwyn**
**22 Orchard Close**
**Melton Woodbridge Suffolk (GB)**
Inventor: **Newns, George Reginald**
**Wayside House**
**Hintlesham Suffolk (GB)**

(74) Representative: **Jewess, Michael**
**British Telecom Intellectual Property Unit Room 1304 151 Gower Street**
**London WC1E 6BA (GB)**

Courier Press, Leamington Spa, England.

# Description

The present invention relates to graded index optical fibres and their production by thermal diffusion using the double crucible drawing technique.

In order to produce optical fibre suitable for use in telecommunications systems it is necessary to ensure that the loss in the optical fibres is 20 dB/km or less. This requirement imposes stringent conditions on the quality of the glasses from which the fibres are made. For example, it is important that such glasses should have a low concentration of transition metal ions and water, which rise to absorption bands. It is also important that phase separation and devitrification should not occur in the glasses when the fibre is drawn, because even if present to only a slight extent these effects will result in glasses with a high scatter loss.

Optical fibres suitable for telecommunications can be made using the double crucible technique. This technique involves melting two glasses, one in a first crucible and the other in a second crucible, the first crucible being located within the second crucible. Both crucibles have drawing nozzles. The fibre thus formed is a clad fibre which is capable of acting as a dielectric optical waveguide. Ideally low melting point glasses are required for the double crucible technique. Such glasses are however complex, containing as a rule at least three oxides, and this introduces problems in keeping the glass losses at a sufficiently low level to permit the production of satisfactory optical fibres. US Patent Specification No: 3,957,342 describes and claims a family of soda-boro-silicate glasses of low softening point and low absorption and scatter loss which have proved highly satisfactory for the production of stepped index optical fibres.

The double crucible drawing technique is especially well adapted for production of graded index fibre by thermal diffusion: see, for example, U.S. Patent Specification No: 4,040,807 and proceedings of the Second European Conference on Optical Fibre Communication, Paris, September 1976, pages 21—26. In this process, the core and clad glasses are subjected to a heat treatment which permits inter-diffusion of the mobile oxides in the two glasses, this heat treatment being carried out during the drawing operation by controlling the length of the drawing nozzle in the double crucible. Using the glasses described and claimed in United States Patent Specification No: 3,957,342, graded index fibre suitable for a wide range of applications can be produced by this process, but the quality is not of the very highest.

The present invention is concerned with certain graded index optical fibres produced from alkali metal-borosilicate glasses similar to those defined in United States Patent Specification No: 3,957,342, but modified by the addition of alkaline earth metal oxides. The present invention represents an improvement over the inventions disclosed and claimed in GB Application No: 2,002,341A. These glasses show considerable potential for the production of high quality graded index fibre by the double crucible method. It is believed that the oxide responsible for the graduation of refractive index is the alkaline earth metal oxide.

In the glasses disclosed in GB Application 2,002,341A, the upper limit for silica was set at about 70 mole per cent because above this limit difficulties in homogenisation and in melting in silica crucibles are encountered. The lower limit for silica was set at about 50 mole per cent because of poor glass durability below this value. The lower limit for sodium oxide was set at 13 mole per cent because of problems due to phase separation of glasses below this limit, and the upper limit was set at 33 mole per cent because of lack of data on glasses with higher soda content.

Potassium oxide may if desired be used instead of sodium oxide. The potash-boro-silicate glass system is in many ways similar to the soda-boro-silicate system except that the region of stable glass formation is smaller.

The overall percentage of alkaline earth metal oxide should not exceed 20 mole per cent.

The choice of alkaline earth metal oxide for the core glass and, if present, for the cladding glass, and the amount in which it is used, is primarily determined by the need to observe the correct refractive index relationship: the refractive index of the core glass should be at least one per cent higher than that of the cladding glass. Calcium oxide, strontium oxide and barium oxide all raise the refractive index of soda boro silicate glass, the effect increasing in the order stated, whereas magnesium oxide lowers it slightly. Glasses containing any of the three first mentioned oxides can also be used as core glasses in combination with unmodified alkali metal-boro-silicate cladding glasses or with alkali metal-boro-silicates modified by a smaller amount of the same oxide.

In these glasses, the silica and boric oxide are network formers, and the alkali metal and alkaline earth metal oxides are network modifiers. The diffusion taking place in the double crucible may involve ion-exchange between the metal ions of the network modifier oxide. Whether or not such ion-exchange can take place depends on the proportions of the various oxides in the core and cladding glasses.

Consider the case where the core and cladding glasses contain identical proportions of silica, boric oxide and sodium oxide, and the core glass contains 10 mole per cent of barium oxide and the cladding glass contains 10 mole per cent of calcium oxide. Here the diffusion process involves exchange of ions of like charge, $Ba^{2+}/Ca^{2+}$. If the cladding glass contains potassium oxide instead of sodium oxide, the much faster $Na^+/K^+$ exchange would also occur.

In a case where only the core glass contains an alkaline earth metal oxide, however, this type of exchange involving divalent ions is not possible because of lack of available divalent ions from the cladding glass. If, for example, the core glass contains 15 mole per cent of calcium oxide, while the cladding glass contains 22.5 mole per cent of sodium oxide, the $Ca^{2+}$ ions exchange with ions of unlike charge type, the $Na^+$ ions from the cladding glass.

Further investigations have now demonstrated to us that, most unexpectedly, significantly better refractive index profiles are obtained from fibres in which the components of the core and cladding glasses have their proportions so chosen that no simple ion-exchange mechanism of this type can be postulated, i.e. where alkaline earth metal ions in the core glass are apparently diffusion against the network formers of the cladding glass. Outstandingly good results have been obtained by matching a soda-boro-silicate core glass containing barium oxide with a soda-boro-silicate cladding glass, the proportions being chosen to exclude $Ba^{2+}/2Na^+$ exchange.

The particular improvement that results from using such a glass pair to make an optical fibre by the double crucible process is that the refractive index profile shows substantially reduced "tail" areas as compared with the profile of glass pairs in which diffusion can be explained by a simple ion-exchange mechanism. The profile approximates better to the ideal parabolic distribution and hence gives a significantly better bandwidth.

We have demonstrated this improvement both by calculating theoretical bandwidth from measured refractive index profiles, and by independent measurement of the actual bandwidth. These results will be discussed in more detail below.

According to a first aspect of the present invention there is provided a graded index optical fibre with a total insertion loss of less than 20 dB/km having a core comprising a glass containing alkali metal oxide, alkaline earth metal oxide, silica and boric oxide and a cladding comprising a glass containing alkali metal oxide, boric oxide and silica, said core having a refractive index at least one per cent greater than said cladding, said core and cladding glasses both containing up to 5 mole per cent of other compatible oxides and no other components, and both said glass compositions being selected to exclude compositions which undergo phase separation or devitrification, which fibre has a graded refractive index distribution produced by a heat treatment which induces a thermal diffusion process between said core and said cladding, characterised in that the glass compositions are such that in the thermal diffusion process there is a net migration of alkaline earth metal ions from said core to said cladding, and no migration of alkaline earth metal ions or alkali metal ions from said cladding to said core.

According to a second aspect of the present invention there is provided a graded index glass optical fibre having a total insertion loss of less than 20 dB/km and having a core and cladding, said core being formed from a first glass consisting of

a) silica,

b) boric oxide,

c) one or more alkali metal oxides selected from the group consisting of sodium oxide and potassium oxide,

d) one or more alkaline earth metal oxides selected from the group consisting of calcium oxide, strontium oxide and barium oxide, and optionally

e) up to 5 mole per cent of one or more other compatible oxides,

said cladding being formed from a second glass having a refractive index at least one per cent lower than that of said first glass and consisting of

f) silica,

g) boric oxide,

h) one or more alkali metal oxides selected from the group consisting of sodium oxide and potassium oxide, and optionally

i) one or more alkaline earth metal oxides selected from the group consisting of calcium oxide, strontium oxide, barium oxide and magnesium oxide, and also optionally

j) up to 5 mole per cent of one or more other compatible oxides,

and said first and second glass compositions being selected to exclude compositions which undergo phase separation or devitrification during optical fibre production, which fibre has a gradation of refractive index produced by thermal diffusion between said first and second glasses and at least partly caused by a composition gradient of alkaline earth metal oxide, characterised in that the mole percentage of alkali metal oxide in said cladding is equal to or less than the mole percentage of alkali metal oxide in said core, and in that the mole percentage of alkaline earth metal oxide in said core is greater than the mole percentage of alkaline earth metal oxide in said cladding.

According to a third aspect of the invention there is provided a graded index glass optical fibre having a total insertion loss of less than 20 dB/km and having a core and cladding, said core being formed from a first glass consisting of

a) 55—65 mole per cent silica,

b) 10—20 mole per cent boric oxide,

c) one or more alkali metal oxides selected from the group consisting of sodium oxide and potassium oxide,

d) up to 20 mole per cent of one or more alkaline earth metal oxides selected from the group consisting of calcium oxide, strontium oxide and barium oxide and, optionally

e) up to 5 mole per cent of one or more other compatible oxides,

said cladding being formed from a second glass having a refractive index at least one per cent lower than that of said first glass and consisting of

f) 55—65 mole per cent of silica,

g) 10—20 mole per cent boric oxide,

h) one or more alkali metal oxides selected from the group consisting of sodium oxide and potassium oxide, and optionally

i) one or more alkaline earth metal oxides selected from the group consisting of calcium oxide, strontium oxide, barium oxide and magnesium oxide, and also optionally

j) up to about 5 mole per cent of one or more other compatible oxides

and said first and second glass compositions which undergo phase separation during optical fibre production, which fibre has a gradation of refractive index produced during manufacture by thermal diffusion between said core glass and said cladding glass at least partly caused by the composition gradient of alkaline earth metal oxide, characterised in that the proportions of said components (c), (d), (h), and if present (i) are such as to exclude ion exchange between alkaline earth metal ions in the core glass and alkali metal or alkaline earth metal ions in the cladding glass during said thermal diffusion.

The composition of the cladding glass must, as previously mentioned, be matched to that of the core glass as far as the proportion of alkali metal oxide and alkaline earth metal oxide are concerned, so that there are no available alkali metal ions or alkaline earth metal ions in the cladding glass to set up an ion-exchange mechanism with those in the core glass. Thus the proportion of alkali metal oxide in the cladding glass should be less than or substantially equal to, the proportion of alkali metal oxide in the core glass, and the same alkali metal oxide preferably used in both glasses. Similarly the proportion of alkaline earth metal oxide in the cladding glass must be less, preferably considerably less, than its proportion in the core glass; preferably the cladding glass contains no alkaline earth metal oxide at all.

Barium oxide has a larger effect on the refractive index than does calcium oxide as previously mentioned, and can therefore be used in smaller quantities. If calcium oxide is used, an especially suitable quantity is from 7 to 11 mole per cent.

The use of barium oxide gives a more diffused profile, inspite of the larger ionic radius of $Ba^{2+}$ (1.34 and compared with 0.99 for $Ca^{2+}$) it has a larger diffusion coefficient. The use of barium oxide is also prefered because calcium oxide-containing glass is more difficult to make; the calcium oxide glasses corrode a silica glass making crucible more rapidly than do the barium oxide glasses, this effect being intensified by the fact that a large quantity of calcium oxide is required. Barium oxide is advantageously used in a quantity of from 3 to 8 mole per cent, especially from 3 to 5 mole per cent.

A further improvement in the refractive index profile of the optical fibre may in some cases be obtained if the cladding glass contains aluminium oxide as a component, the core glass being substantially free of this oxide. Preferably the amount of alumina in the cladding glass should not exceed 4 mole per cent and the amount is advantageously within the range of from 2 to 3 mole per cent.

The replacement of a smaller proportion on the silica in a soda-boro-silicate cladding glass by alumina gives, with the same core glass a reduction in the "tail" areas of the profile i.e. the extent of diffusion at the sides of the profile is reduced, while the extent of diffusion at the centre of the profile is substantially unchanged. The "tailing" of a typical diffused-core fibre refractive index profile away from the fibre axis leads to degradation of the bandwidth by under compensation of the high-angle rays that travel within that region. Reduction of the "tail" areas to give a more nearly parabolic profile will lead to an improvement in bandwidth, provided that the overall extent of diffusion is sufficiently high.

The addition of alumina also increases the durability of the glass.

The alumina behaves as a network former in these glasses and there is no participation of $Al^{3+}$ ions in ion-exchange processes.

As previously mentioned, other oxides may be added to the core and cladding glasses, up to a total of about 5 mole per cent, the only limitation on these additives being that they should not cause substantial worsening of the optical properties for example absorption loss of the glass. For example, arsenic trioxide may be added as described in U.S. Patent Specification No: 3,957,342 to stabilise the redox state of the glass. Such additives are referred to in this specification as compatible oxides.

The invention is illustrated by examples 1 to 4 and 12 of Table I. The remaining examples are comparative examples of which 5 to 8, 9 and 10 correspond respectively to examples 1 to 4, 6 and 5 of GB 2 002 341 A. The batch materials used for the preparation of the various glasses were commercially available materials.

The boric oxide, sodium carbonate, alumina and silica used, except in examples 4 to 10 typically contained from 10 to 20 parts in $10^9$ by weight of iron, less than one part in $10^9$ by weight of copper, less than one part in $10^9$ by weight of chromium and less than one part in $10^9$ of other transition elements. The ultra-pure calcium carbonate and barium carbonate used contained less than one part by weight in $10^9$ of each of the following elements:—

maganese, iron, copper, nickel, chromium, and cobalt.

Slightly less pure starting materials are used in example 4 to 8. The boric oxide, sodium carbonate, potassium carbonate alumina and silica used in these examples typically contained from 0.05 to 0.2 ppm (parts per million) by weight of iron, 0.01 to 0.04 ppm by weight of copper, less than 0.05 ppm by weight of chromium and less than 0.01 ppm of other transition elements. The ultra-pure calcium carbonate and barium carbonate used contained less than 100 part by weight in $10^9$ of maganese, less than 20 parts by weight in $10^9$ of iron, less than 10 parts by weight in $10^9$ of copper, less than 10 parts by weight in $10^9$ of nickel, less than 30 parts by eight in $10^9$ of chromium, and less than 5 parts by weight in $10^9$ of cobalt. Somewhat less pure materials were used in examples 9 and 10.

The glasses were prepared, as described in U.S. Patent Specification No: 3,957,342, by melting the high purity batch materials in silica crucibles (melt sizes up to 2 kg.). A mixture of carbon monoxide and carbon dioxide was bubbled through the glass in order to simultaneously optimise its redox state and to homogenise and dry it.

Rods (up to 1.5 m long and 12 mm diameter) were pulled from the surface of the melt and stored in silica tubes until required. Fibres were drawn from a platinum double crucible with a 30 cm drawing nozzle, as described in more detail in British Patent Application No: 2 016 443 A. The rods were fed into the double crucible, and fibre was drawn at rates of 1 to 1.5 km/hr. The outside diameter of the fibre was maintained at $125 \pm 1$ micrometre by on-line monitoring and a slow feedback loop. The crucible design ensured a core to cladding ratio of 50:125. Subsequent to drawing, the fibre was coated with a silicone resin.

The composition of the glasses used in the examples are listed in the Table 1, together with an indication of the ion-exchange processes occurring during diffusion in the nozzle of the double crucible.

Examples 12 to 15 show the effect of alumina in the cladding glass and each has been paired in the Table with the corresponding example in which no alumina was used in the cladding.

In examples 1, 2, 4 and 12, $Ba^{2+}$ ions from the core glass are diffusing against the network formers of the cladding glass; this is indicated for the sake of simplicity as "$Ba^{2+}$/—" to show that there are no available alkaline earth metal or alkali metal ions in the cladding glass for the barium ions of the core glass to diffuse against. The exact nature of the diffusing species from the cladding glass is not known. Example 3 illustrates the diffusion of calcium ions from the core glass against the network formers of the cladding glass.

In Examples 5, 6, 7, 13, 14 and 15, the molar percentages of sodium oxide in the core and cladding glasses are such that some sodium ions from the cladding glass are available for diffusion against the calcium ions of the core glass. The remaining calcium ions must be accounted for by diffusion against the network formers.

Examples 9, 10, and 11 exemplify glass pairs in which a simple exchange of ions of like charge type can take place. The proportions of corresponding components in core and cladding are identical.

Finally, Example 8 is a glass pair in which exchange between ions of unlike charge type take place. The proportions of the network formers in the core glass and the cladding glass are the same, and the molar percentage of sodium oxide in the cladding glass is equal to the sum of the molar percentages of calcium oxide and sodium oxide in the core glass.

Some optical properties of the fibres of the Examples are shown in Table 2.

TABLE 1

GLASS COMPOSITIONS

| Example | Diffusion Type | Core (mole %) | | | | | | Cladding (mole %) | | | | | | |
|---|---|---|---|---|---|---|---|---|---|---|---|---|---|---|
| | | $SiO_2$ | $B_2O_3$ | $Al_2O_3$ | $Na_2O$ | BaO | CaO | $SiO_2$ | $B_2O_3$ | $Al_2O_3$ | $Na_2O$ | $K_2O$ | CaO | MgO |
| 1 | $Ba^{2+}/-$ | 60.0 | 16.0 | — | 20.0 | 4.0 | — | 62.5 | 17.5 | — | 20.0 | — | — | — |
| 2 | $Ba^{2+}/-$ | 57.5 | 14.5 | — | 20.0 | 8.0 | — | | | | | | | |
| 3 | $Ca^{2+}/-$ | 57.6 | 14.4 | — | 20.0 | — | 8.0 | | | | | | | |
| 4 | $Ba^{2+}/-$ | 60.0 | 15.0 | — | 21.0 | 4.0 | — | | | | | | | |
| 5 | $Ca^{2+}/2Na^+$ $Ca^{2+}/-$ | 54.7 | 15.0 | — | 22.3 | — | 8.0 | 60.0 | 15.0 | | 25.0 | — | — | — |
| 6 | $Ca^{2+}/2Na^+$ $Ca^{2+}/-$ | | | | | | | 62.5 | 12.5 | — | 25.0 | — | — | — |
| 7 | $Ca^{2+}/2Na^+$ $Ca^{2+}/-$ | 57.2 | 17.5 | — | 17.3 | — | 8.0 | 62.5 | 17.5 | — | 20.0 | — | — | — |
| 8 | $Ca^{2+}/2Na^+$ | 60.0 | 17.5 | — | 15.0 | — | 7.5 | 60.0 | 17.5 | — | 22.5 | — | — | — |

TABLE 1 (Continued)

| Example | Diffusion Type | Core (mole %) | | | | | | Cladding (mole %) | | | | | | |
|---|---|---|---|---|---|---|---|---|---|---|---|---|---|---|
| | | SiO₂ | B₂O₃ | Al₂O₃ | Na₂O | BaO | CaO | SiO₂ | B₂O₃ | Al₂O₃ | Na₂O | K₂O | CaO | MgO |

| Example | Diffusion Type | $SiO_2$ | $B_2O_3$ | $Al_2O_3$ | $Na_2O$ | BaO | CaO | $SiO_2$ | $B_2O_3$ | $Al_2O_3$ | $Na_2O$ | $K_2O$ | CaO | MgO |
|---|---|---|---|---|---|---|---|---|---|---|---|---|---|---|
| 9 | $Ba^{2+}/Ca^{2+}$ | 60.0 | 10.0 | — | 20.0 | 10.0 | — | 60.0 | 10.0 | — | 20.0 | — | 10.0 | — |
| 10 | $Ba^{2+}/Ca^{2+}$ $(Na^{+}/K^{+})$ | 57.82 | 7.23 | 3.62 | 19.27 | 12.04 | — | 57.82 | 7.23 | 3.62 | — | 19.27 | 12.04 | — |
| 11 | $Ca^{2+}/Mg^{2+}$ | 57.2 | 17.5 | — | 17.3 | — | 8.0 | 57.2 | 17.5 | — | 17.3 | — | — | 8.0 |
| 12 | $Ba^{2+}/-$ | 60.0 | 15.0 | — | 21.0 | 4.0 | | 60.0 | 17.5 | 2.5 | 20.0 | — | — | — |
| 4 | | | | | | | | 62.5 | 17.5 | — | 20.0 | — | — | — |
| 13 | $Ca^{2+}/2Na^{+}$ | 57.2 | 17.5 | — | 17.3 | — | 8.0 | 60.0 | 17.5 | 2.5 | 20.0 | — | — | — |
| 14 | $Ca^{2+}/-$ | | | | | | | 62.5 | 17.5 | — | 20.0 | — | — | — |
| 15 | $Ca^{2+}/2Na^{+}$ | | | | | | | 57.5 | 15.0 | 2.5 | 25.0 | | | |
| | $Ca^{2+}/-$ | 57.6 | 14.4 | — | 20.0 | — | 8.0 | | | | — | — | — | — |
| 3 | $Ca^{2+}/-$ | | | | | | | 62.5 | 17.5 | — | 20.0 | — | — | — |

TABLE 2

OPTICAL PROPERTIES OF FIBRES

| Example | Total Insertion Loss at 850–900 nm (dB/km) | Pulse Broadening (ns/km) | 3dB Optical Bandwidth (MHz km) | | Numerical Aperture | $\phi$ |
|---|---|---|---|---|---|---|
| | | | Measured | Theory | | |
| 1 | 5.2 | — | >300 | 257 | 0.209 | ~0.06 |
| 2 | 8.5 | — | >400 | — | 0.268 | ~0.06 |
| 3 | 5.0 | — | 150–294 | 142 | 0.184 | 0.02–0.05 |
| 4 | 10.8 | — | 100 | — | 0.192 | ~0.09 |
| 5 | 8.2 | 2.8 | — | — | 0.180 | 0.20 |
| 6 | 6.5 | ~2 | — | — | 0.197 | 0.05 |
| 7 | 6.4 | — | 95–111 | (63) | — | 0.01 |
| 8 | 10.0 | — | — | 206 | 0.150 | 0.06 |
| 9 | — | — | — | — | 0.210 | 0.02 |
| 10 | — | — | — | 63 | 0.210 | 0.08 |
| 11 | 5.0 | 5.0 | 90–110 | — | 0.23 | ~0.01–0.02 |
| 12 | 10.6 | — | 150 | — | 0.197 | ~0.09 |
| 4 | 10.8 | — | 100 | — | 0.192 | ~0.09 |
| 13 | 6.9 | — | 35 | — | 0.216 | ~0.01 |
| 14 | 3.7 | — | 72–136 | 65, 84 | 0.195 | ~0.01 |
| 15 | 5.6 | — | >132 | 113 | 0.216 | less than for Example 3 |
| 3 | 5.0 | — | 150–294 | 142 | 0.184 | 0.02–0.05 |

The invention will now be described with reference to the examples, and the accompanying drawings, in which:—

Fig. 1 shows the refractive index profile of the optical fibre referred to in Example 5.

Fig. 2 shows the refractive index profiles of the fibres of examples 1, 3 and 7.

Fig. 3 is a plot of the diffusion coefficients of the $Ba^{2+}$ and $Ca^{2+}$ against concentration,

Fig. 4 shows the refractive index profiles of the fibres of examples 12 and 4.

Fig. 5 shows the refractive index profiles of the fibres of Examples 13 and 14.

Fig. 6 shows theoretically predicted concentration gradients for sodium and barium for ion-exchange thermal diffusion.

Fig. 7 shows observed concentration gradients for sodium and barium diffusion in one glass pair.

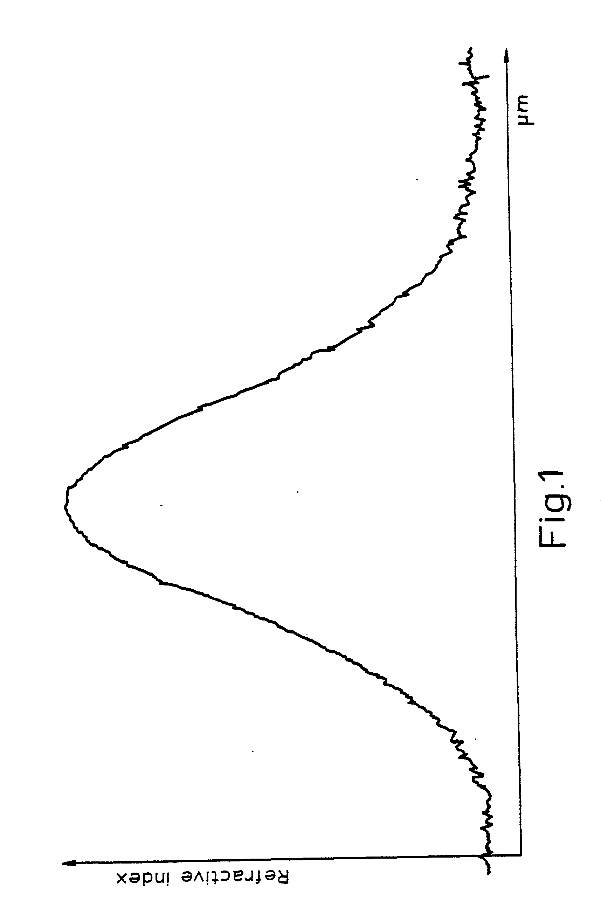

The refractive index profile of the fibre of Example 5 is shown in Fig. 1.

This is a slightly over diffused profile, i.e. too much diffusion has occured to give the optimum parabolic refractive index distribution. The extent of diffusion $\phi$, which ideally should have a value of from 0.06 to 0.08, was calculated from the measured profile to have a value of 0.2. The quantity $\phi$ is given by the equation:

$$\phi = Dt/A^2 = DL/a^2v$$

where D is the diffusion coefficient (dependent on temperature),

t is the residence time of the glass in the nozzle (also temperature-dependent)

A is the radius of the core stream in the double crucible,

L is the length of the diffusion nozzle of the double crucible,

a is the radius of the fibre, and

v is the pulling speed of the fibre.

It will be seen that the extent of diffusion can be reduced without much difficulty, by, reducing the length of the nozzle.

The numerical aperture of the fibre of Example 5 was calculated from the refractive index profile to be 0.18. As may be seen from Table 2, the use of barium oxide instead of calcium oxide in the core glass gives higher numerical aperture values: the use of a higher proportion of calcium oxide has a similar but less marked effect.

Referring again to Table 2, the theoretical bandwidth given for Examples 1, 3, 7, 8, 9, 14 and 15 were predicted from the measured refractive index profiles using a ray tracing technique described in the paper "Bandwidth of Diffused Core Fibres" by J. V. Wright, 4th European Conference Optical Communications, Geveva (1978) pages 270—275.

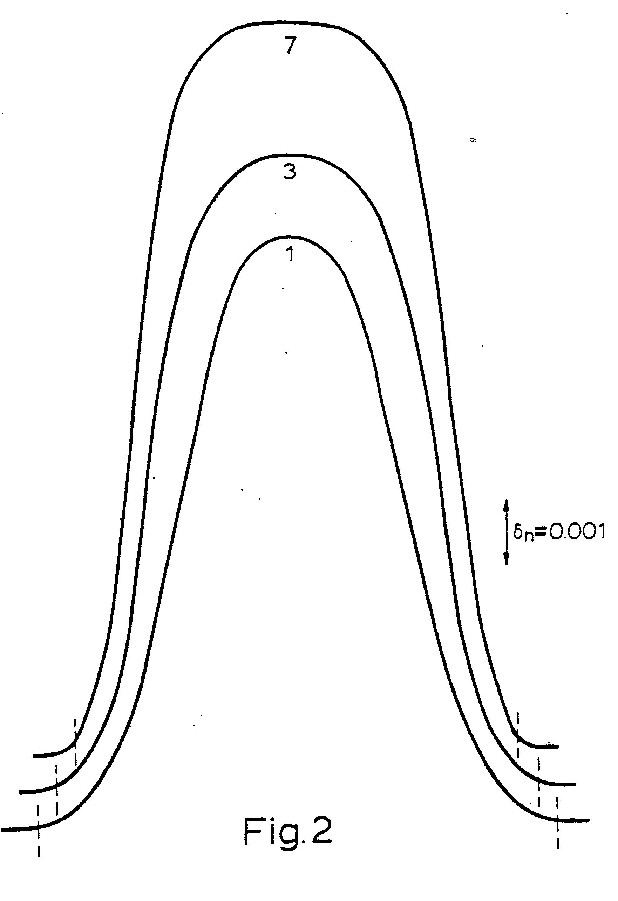

Considering first the measured bandwidth, the improvement obtained by excluding ion-exchange is not immediately apparent except in Examples 1 and 2. The reason for this lies in the extent of diffusion; the fibre of Example 3 is under-diffused (as is that of Example 7) whereas the fibres of Examples 4, 5 and 12 are over diffused. This is apparent from the approximate values of $\phi$, the extent of diffusion, shown in the Table. For Examples 1, 3 and 7, this can be seen more clearly in Fig. 2 of the accompanying drawings in which the profiles of those three fibres are superimposed. These fibres were drawn under identical conditions and, as may be seen from Table 2, have the same cladding glass. The $\phi$ value decreases in the order $\phi_1 > \phi_3 > \phi_7$, and the profile of Example 7 is very step like ($\phi$ approximately 0.01). The profiles of Examples 1 and 3 demonstrate the superiority of barium oxide over calcium oxide despite the larger ionic radius of $Ba^{2+}$.

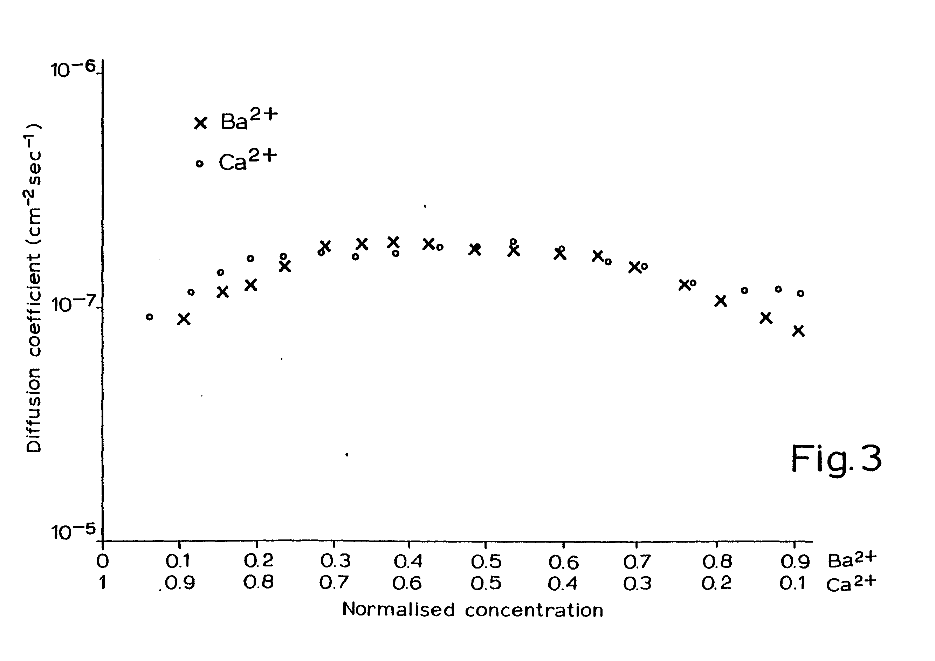

From the equation for $\phi$ given previously, it will be seen that under certain conditions (constant t, A, L, a, v) the quantity $\phi$ is proportional to the diffusion coefficient D; in a step index fibre $\phi$ is of course 0. The $\phi$ value of a graded index fibre can be computed from the measured refractive index profile. According to simple diffusion theory the diffusion coefficient D is independent of concentration and $\phi$ should therefore be constant over the whole profile. This has been found to be the case for fibres in which diffusion involves ion-exchange between ions of like charge type; for example the $\phi$ value of the glass pair of Example 10 was found to be approximately 0.08 over the whole profile. The dependence of D on concentration in this system was also tested independently by measuring the diffusion coefficients of the $Ba^{2+}$ and $Ca^{2+}$ ions. Because of the difficulties in calculation involved in a system such as an optical fibre having a cylindrical interface, the measurements were carried out using blocks of glass and a planar interface; the results are shown in Fig. 3 of the drawings. The diffusion coefficients of the two ions at 1000°C are shown and it will be seen that both exhibit only a slight variation, within a factor of about 2, and are virtually the same at normalised concentrations of 0.1 and 0.9.

A constant $\phi$ profile does not, however, give the best optical properties. As is well known, an approximately parabolic distribution with a $\phi$ value varying from a maximum in the centre to approximately 0 at the sides gives the maximum bandwidth. The "tailing" of a typical constant $\phi$ refractive index profile away from the fibre axis leads to degradation of the bandwidth. Reduction of the size of these "tail" areas to give a more nearly parabolic profile should therefore lead to an improvement in bandwidth, given the same maximum bandwidth.

When an attempt was made to calculate the $\phi$ values for the fibres of Examples 1 to 4 and 12, it was found that there was a substantially greater variation of $\phi$ with distance from the axis than expected; the values given in Table 2 are the maximum measured at the centres of the profile. Thus the profiles of these fibres approximate more closely to the ideal parabolic distribution than would be predicted by simple diffusion theory.

Consideration of the equation for $\phi$ given previously indicates that, since the other parameters were constant the diffusion coefficient D was varying with distance from the interface i.e. with the concentration of diffusing species. It is therefore apparent that the improved profiles obtained when ion-exchange is excluded can be attributed to an abnormal diffusion effect.

An improvement in the shape of the profile would be expected to lead to an improved measured bandwidth, and this can be seen in examples 1 and 2, for which the maximum $\phi$ values are close to the optimum. For some examples the theoretical bandwidth has also been calculated, using J. V. Wrights method mentioned previously; this calculation assumes all modes are launched and hence gives the most pessimistic bandwidth for a given measured profile but it still shows the claimed trend.

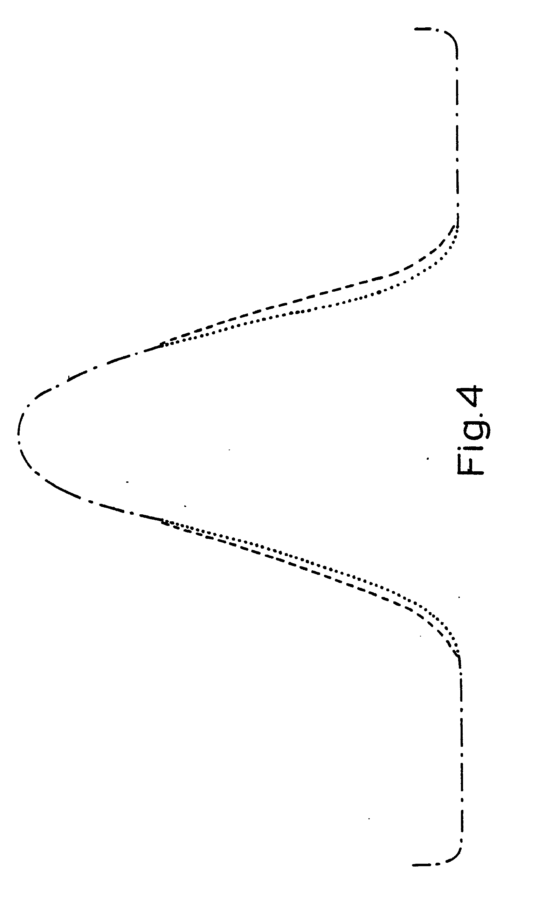

As previously mentioned, Examples 12 to 15 show the effect of incorporating alumina in the cladding glass. The refractive index profiles of the fibres of Examples 12 and 4 are compared in Fig. 4 of the drawings, and those of Examples 13 and 14 in Fig. 12.

Referring to Fig. 4 the dotted line represents the profile of the fibre of Example 12 in which the cladding glass contains 2.5 mole per cent of alumina, and the dashed line represents the profile of the comparison fibre of Example 4. At the chain-dotted region the two profiles coincide. It will be seen that the effect of introducing alumina into the cladding glass is to decreases the size of the "tail" areas of the profile. This results in an improvement in the measured 3dB optical bandwidth from 100 to 150 MHz km. It will be noted that the centre of the profile is unchanged; the $\phi$ value at the centre is the same for both profiles but is lower at the sides in Example 12, giving a better approximation to the ideal parabolic shape with $\phi$ approaching zero at the sides. Both profiles are somewhat overdiffused, the $\phi$ value at the centre being about 0.09.

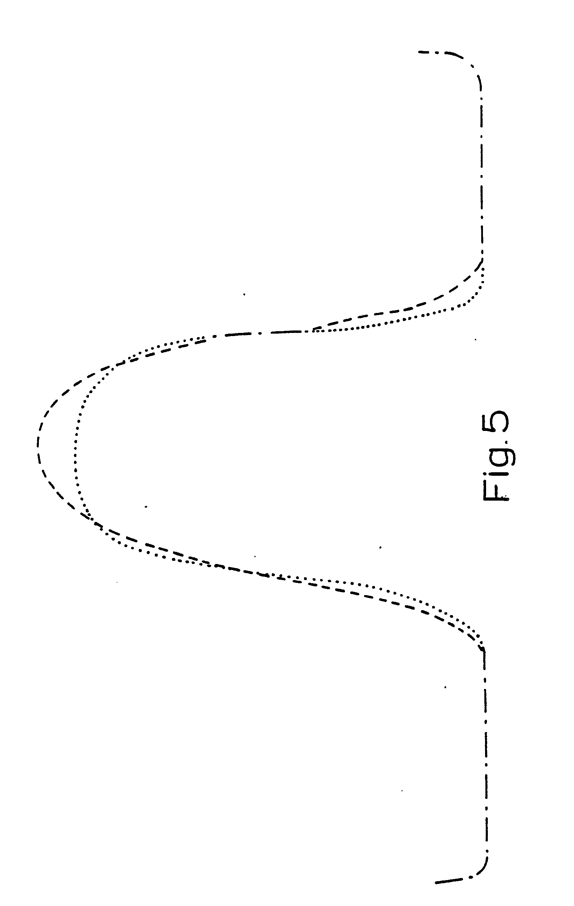

Turning now to Fig. 5, the dotted line relates to Example 13 and the dashed line to the comparison fibre without alumina in the cladding, Example 14. In this case the profile of the comparison fibre is considerably underdiffused ($\phi$ approximately 0.01) and the overall reduction of the diffusion rate caused by the addition of alumina to the cladding results in an even greater underdiffusion ($\phi$ less than 0.01) and a corresponding reduction in bandwidth from 72—136 MHz km to 35 MHz km. The improvement in bandwidth that would result from the reduction of the "tail" areas is in this case completely cancelled out by the overall reduction in the extent of diffusion.

Example 15 also relates to an underdiffused system, but since it is less underdiffused ($\phi$ between 0.02 and 0.05) than the system of Examples 13 and 14 the addition of alumina to the cladding results in a proportionately smaller reduction in bandwidth.

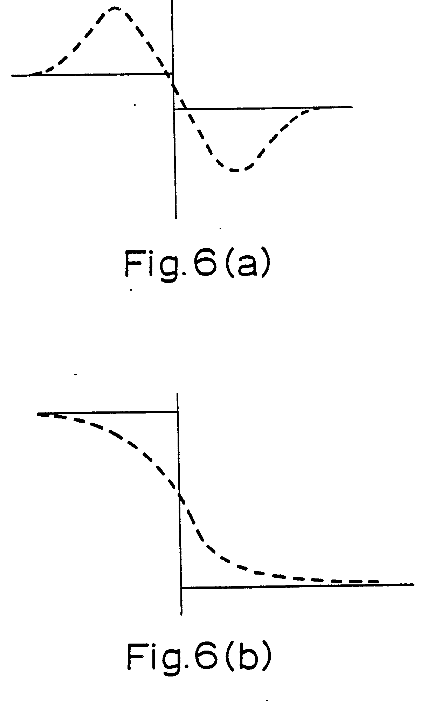

In certain of the Examples described above, it has been stated that ion-exchange processes are not responsible for the refractive index gradients induced in the manufacturing process by thermal diffusion. From the nature of the concentration gradients of possible diffusing species in the core and cladding, it is intrinsically unlikely that such a process could occur, but not totally impossible. One can envisage the situation in which a coupled ion exchange process occurs, so that one species was forced to diffuse against the concentration gradient. Consider a situation in which the core glass was a boro-soda-silicate glass containing barium oxide, and the cladding glass was a soda-boro-cilicate glass containing no barium oxide or other alkaline earth metal oxide, and having a sodium concentration less than that in the core. The only mobile species in this particular glass pair would be barium ions and sodium ions. If an ion exchange process were to occur, the sodium ion concentration after diffusion would be as shown by the dotted line curve of Fig. 6a, (sodium distribution before diffusion would be as shown by the continuous horizontal lines). The barium concentration distribution would appear as shown in Fig. 6b by the dotted line. The barium concentration does not differ appreciably from what would be expected if a non ion-exchange process occured. However if no ion exchange was possible, the sodium ion concentration distribution would be substantially unchanged by the diffusion process.

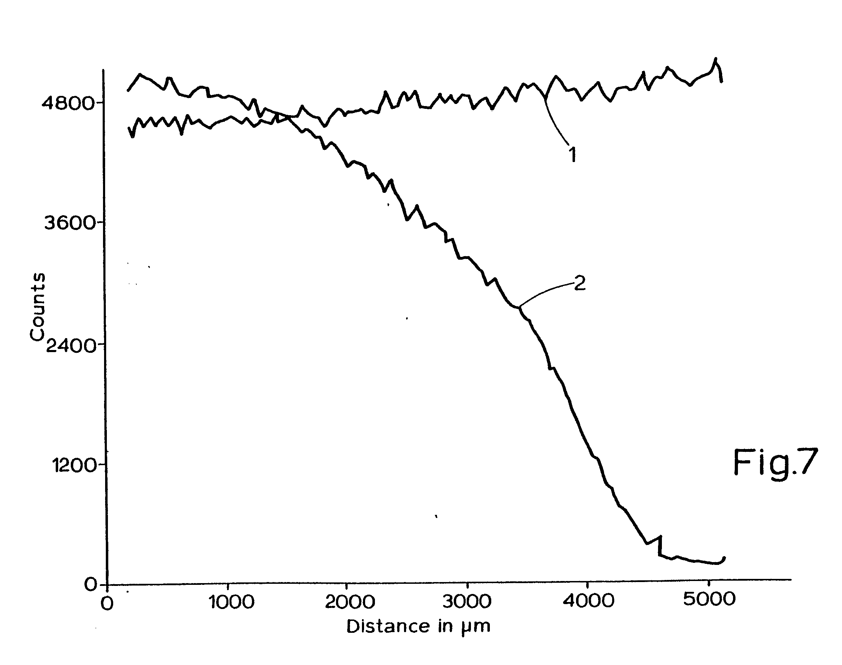

In order to test this concept of the diffusion process occuring in these glasses experiments were carried out using glass blocks, and after diffusion the glass blocks were subjected to an electron microprobe analysis. The glass which would be equivalent to the core glass that was used in the experiments had the composition 21 mole per cent sodium oxide, 4 mole per cent barium oxide, 15 mole per cent boric oxide, and, 60 mole per cent silica; the glass, which would be equivalent to the cladding glass in an optical fibre has the composition 20 mole per cent sodium oxide, 17.5 mole per cent boric oxide, 61 mole per cent silica, and 1.5 mole per cent alumina. Two glass blocks were prepared, by pouring the denser glass into the bottom of a crucible, and then pouring the lighter glass on top of it. The bottom glass was cooled to 700°C, before the second glass was added. The glass blocks prepared in this way were subjected to heat treatment at 973°C for a period of 21 hours to allow diffusion across the interface between the two glasses. In the production of an optical fibre the temperature of heat treatment would fall in the range of 960° to 1100°C as the glass passes through the diffusion nozzle. Fig. 7 shows the results of the experiments. Curve 1 is the sodium concentration, expressed as a count level obtained from the electron microprobe equipment versus the distance measured from an arbitary point. Curve 2 represents the concentration gradient for barium oxide. The undiffused ends of the samples have approximately the same soda contents, yet the mean level of the sodium counts at each end differed by about 10% because of the different surrounding glass matrices. However using computed correction factors these counts converted to sodium content close to the as weighed values. This matrix effect complicates the interpretation of the results obtained in the diffusion zone. However it is quite apparent from Fig. 7 that the observed concentration gradient for sodium bears no resemblence to that illustrated in Fig. 6, and on the basis of this it can be concluded that the diffusion process occuring in the glass is not an ion exchange process.

Claims

1. A graded index optical fibre with a total insertion loss of less than 20 dB/km having a core comprising a glass containing alkali metal oxide, alkaline earth metal oxide, silica and boric oxide and a cladding comprising a glass containing alkali metal oxide, boric oxide and silica, said core having a refractive index at least one per cent greater than said cladding, said core and cladding glasses both containing up to 5 mole per cent of other compatible oxides and no other components, and both said glass compositions being selected to exclude compositions which undergo phase separation or devitrification, which fibre has a graded refractive index distribution produced by a heat treatment which induces a thermal diffusion process between said core and said cladding, characterised in that the glass compositions are such that in the thermal diffusion process there is a net migration of alkaline earth metal ions from said core to said cladding, and no migration of alkaline earth metal ions or alkali metal ions from said cladding to said core.

2. A graded index glass optical fibre having a total insertion loss of less than 20 dB/km and having a core and cladding, said core being formed from a first glass consisting of
a) silica,
b) boric oxide,
c) one or more alkali metal oxides selected from the group consisting of sodium oxide and potassium oxide,
d) one or more alkaline earth metal oxides selected from the group consisting of calcium oxide, strontrium oxide and barium oxide, and optionally
e) up to 5 mole per cent of one or more other compatible oxides,
said cladding being formed from a second glass having a refractive index at least one per cent lower than that of said first glass and consisting of
f) silica

g) boric oxide,
h) one or more alkali metal oxides selected from the group consisting of sodium oxide and potassium oxide, and optionally
i) one or more alkaline earth metal oxides selected from the group consisting of calcium oxide, strontium oxide, barium oxide and magnesium oxide, and also optionally,
j) up to 5 mole per cent of one or more other compatible oxides,
and said first and second glass compositions being selected to exclude compositions which undergo phase separation or devitrification during optical fibre production, which fibre has a graduation of refractive index produced by thermal diffusion between said first and second glasses and at least partly caused by a composition gradient of alkaline earth metal oxide, characterised in that the mole percentage of alkali metal oxide in said cladding is equal to or less than the mole percentage of alkali metal oxide in said core, and in that the mole precentage of alkaline earth metal oxide in said core is greater than the mole percentage of alkaline earth metal oxide in said cladding.

3. A graded index glass optical fibre as claimed in either claim 1 or claim 2 further characterised in that said core is formed from a glass consisting of
a) 55—65 mole per cent silica,
b) 10—20 mole per cent boric oxide,
c) one or more alkali metal oxides selected from the group consisting of sodium oxide and potassium oxide,
d) up to 20 mole per cent of one or more alkaline earth metal oxides selected from the group consisting of calcium oxide, strontium oxide and barium oxide, and optionally
e) up to 5 mole per cent of one or more other compatible oxides,
and in that said cladding is formed from a second glass consisting of
f) 55—65 mole per cent silica,
g) 10—20 mole per cent boric oxide,
h) one or more alkali metal oxides selected from the group consisting of sodium oxide and potassium oxide, and optionally
i) one or more alkaline earth metal oxides selected from the group consisting of calcium oxide, strontium oxide, barium oxide and magnesium oxide, and also optionally
j) up to 5 mole per cent of one or more other compatible oxides.

4. A graded index glass optical fibre having a total insertion loss of less than 20 dB/km and having a core and cladding, said core being formed from a first glass consisting of
a) 55—65 mole per cent silica,
b) 10—20 mole per cent boric oxide,
c) one or more alkali metal oxides selected from the group consisting of sodium oxide and potassium oxide,
d) up to 20 mole per cent of one or more alkaline earth metal oxides selected from the group consisting of calcium oxide, strontium oxide and barium oxide and, optionally

e) up to 5 mole per cent of one or more other compatible oxides,

said cladding being formed from a second glass having a refractive index at least one per cent lower than that of said first glass and consisting of

f) 55—65 mole per cent of silica,

g) 10—20 mole per cent boric oxide,

h) one or more alkali metal oxides selected from the group consisting of sodium oxide and potassium oxide, and optionally

i) one or more alkaline earth metal oxides selected from the group consisting of calcium oxide, strontium oxide, barium oxide and magnesium oxide, and also optionally

j) up to about 5 mole per cent of one or more other compatible oxides,

and said first and second glass compositions being selected to exclude compositions which undergo phase separation during optical fibre production, which fibre has a gradation of refractive index produced during manufacture by thermal diffusion between said core glass and said cladding glass at least partly caused by the composition gradient of alkaline earth metal oxide, characterised in that the proportions of said components (c), (d), (h), and if present (i) are such as to exclude ion exchange between alkaline earth metal ions in the core glass and alkali metal or alkaline earth metal ions in the cladding glass during said thermal diffusion.

5. An optical fibre as claimed in claim 3 or 4 further characterised in that the mole percentage of alkali metal oxide in said cladding glass is equal to or less than the mole percentage of alkali metal oxide in said core glass.

6. An optical fibre as claimed in claim 5 further characterised in that said core and cladding glasses each contain a mutually identical single alkali metal oxide.

7. An optical fibre as claimed in claim 6 further characterised in that said mutually identical alkali metal oxide is sodium oxide.

8. An optical fibre as claimed in any of claims 3—7 further characterised in that the mole percentage of alkaline earth metal oxide in said cladding glass is less than the mole percentage of alkaline earth metal oxide in said core glass.

9. An optical fibre as claimed in claim 8 further characterised in that said core and cladding glasses each contain a mutually identical single alkaline earth metal oxide.

10. An optical fibre as claimed in claim 8 further characterised in that said core glass contains a single alkaline earth metal oxide and said cladding glass contains substantially no alkaline earth metal oxide.

11. An optical fibre as claimed in any previous claim characterised in that said core glass contains:—

55—65 mole per cent silica, 10—20 mole per cent boric oxide, 14—25 mole per cent sodium oxide, 2—11 mole per cent of an alkaline earth metal oxide selected from the group consisting of calcium oxide, strontium oxide and barium oxide, and up to 5 mole per cent of one or more other compatible oxides.

12. An optical fibre as claimed in any previous claim further characterised in that said core glass contains 57—61 mole per cent silica, 14—16.5 mole per cent boric oxide, 19—22 mole per cent sodium oxide, 3—8 mole per cent barium oxide and up to 5 mole per cent of one or more other compatible oxides.

13. An optical fibre as claimed in any previous claim further characterised in that said cladding glass contains 55—65 mole per cent silica, 10—20 mole per cent boric oxide, 19—25 mole per cent sodium oxide, and up to 5 mole per cent of one or more other compatible oxides, excluding alkaline earth metal oxides.

14. An optical fibre as claimed in any previous claim further characterised in that said cladding glass contains 59—63 mole per cent silica, 17—19 mole per cent boric oxide, 19—22 mole per cent of sodium oxide, and up to 5 mole per cent of one or more other compatible oxides, excluding alkaline earth metal oxides.

15. An optical fibre as claimed in any previous claim characterised in that the cladding glass contains up to 3 mole per cent of alumina and said core glass contains no alumina.

## Revendications

1. Fibre optique à indice progressif (gradient d'indice de réfraction) avec une perte d'insertion totale inférieure à 20 dB/km, comportant un coeur qui comprend un verre qui contient un oxyde de métal alcalin, un oxyde de métal alcalinoterreux, de la silice et de l'oxyde borique, et une gaine ou revêtement qui comprend un verre contenant un oxyde de métal alcalin, de l'oxyde borique et de la silice, le coeur ayant un indice de réfraction supérieur d'au moins 1% de celui de la gaine, les verres du coeur et de la gaine pouvant contenir tous deux jusqu'à 5 moles % d'autres oxydes compatibles mais pas d'autres constituants et ces deux compositions de verres étant choisies de manière à exclure des compositions qui subissent une séparation de phases ou dévitrification, fibre dont la répartition d'indice de réfraction progressif est obtenue par un traitement thermique entraînant un processus de diffusion thermique entre le coeur et la gaine, et qui est caractérisée en ce que les compositions des verres sont telles que dans la diffusion thermique il se produit une migration nette d'ions de métaux alcalinoterreux du coeur vers la gaine, et il n'y a pas de migration d'ions de métaux alcalinoterreux ou de métaux alcalins de la gaine vers le coeur.

2. Fibre de verre optique à indice progressif ayant une perte d'insertion totale inférieure à 20 dB/km et comportant un coeur et une gaine, le coeur étant formé d'un premier verre comprenant:

a) de la silice,

b) de l'oxyde borique,

c) un ou plusieurs oxydes de métaux alcalins choisis parmi l'oxyde de sodium et l'oxyde de potassium,

d) un ou plusieurs oxydes de métaux alcalinoterreux choisis parmi les oxydes de calcium, de strontium, et de baryum, et facultativement

e) jusqu'à 5 moles % d'un ou de plusieurs autres oxydes compatibles,

la gaine étant formée d'un second verre dont l'indice de réfraction est inférieur d'au moins 1 % à celui du premier verre et qui comprend

f) de la silice,

g) de l'oxyde borique,

h) un ou plusieurs oxydes de métaux alcalins choisis parmi les oxydes de sodium et de potassium, et facultativement

i) un ou plusieurs oxydes de métaux alcalinoterreux choisi parmi les oxydes de calcium, de strontium, de baryum et de magnésium, et facultativement aussi

j) jusqu'à 5 moles % d'un ou de plusieurs autres oxydes compatibles,

et les compositions du premier et du second verres étant choisies de manière à exclure des compositions qui subissent une séparation de phases ou dévitrification au cours de la production de la fibre optique, fibre dont le gradient d'indice de réfraction est obtenu par diffusion thermique entre le premier et le second verre et au moins en partie par un gradient de composition de l'oxyde de métal alcalinoterreux, et qui est caractérisée en ce que le pourcentage molaire de l'oxyde de métal alcalin de la gaine est égal ou inférieur au pourcentage de l'oxyde de méal alcalin du coeur, et en ce que le pourcentage molaire de l'oxyde de métal alcalinoterreux de coeur est supérieur à celui de l'oxyde de métal alcalinoterreux de la gaine.

3. Fibre de verre optique à indice progressif selon la revendication 1 ou 2, caractérisée en outre en ce que le coeur est formé d'un verre comprenant

a) 55 à 65 moles % de silice,

b) 10 à 20 moles % d'oxyde borique,

c) un ou plusieurs oxydes de métaux alcalins choisis parmi les oxydes de sodium et de potassium,

d) jusqu'à 20 moles % d'un ou de plusieurs oxydes de métaux alcalinoterreux choisis parmi les oxydes de calcium, de strontium, et de baryum, et facultativement

e) jusqu'à 5 moles % d'un ou de plusieurs autres oxydes compatibles,

et en ce que la gaine est formée d'un second verre comprenant

f) 55 à 65 moles % de silice,

g) 10 à 20 moles % d'oxyde borique,

h) un ou plusieurs oxydes de métaux alcalins choisis parmi les oxydes de sodium et de potassium, et facultativement

i) un ou plusieurs oxydes de métaux alcalinoterreux choisis parmi les oxydes de calcium, de strontium, de baryum et de magnésium, et facultativement aussi

j) jusqu'à 5 moles % d'un ou de plusieurs autres oxydes compatibles.

4. Fibre de verre optique à indice progressif ayant une perte d'insertion totale inférieur à 20 dB/km et comportant un coeur et une gaine, le coeur étant formé d'un premier verre qui comprend

a) 55 à 65 moles % de silice,

b) 10 à 20 moles % d'oxyde borique,

c) un ou plusieurs oxydes de métaux alcalins choisis parmi les oxydes de sodium et de potassium,

d) jusqu'à 20 moles % d'un ou plusieurs oxydes de métaux alcalinoterreux choisis parmi les oxydes de calcium, de strontium, et de baryum, et facultativement,

e) jusqu'à 5 moles % d'un ou de plusieurs autres oxydes compatibles,

la gaine étant formée d'un second verre dont l'indice de réfraction est inférieure d'au moins 1% à celui du premier verre et qui comprend

f) 55 à 65 moles % de silice,

g) 10 à 20 moles % d'oxyde borique,

h) un ou plusieurs oxydes de métaux alcalins choisis parmi les oxydes de sodium et de potassium, et facultativement

i) un ou plusieurs oxydes de métaux alcalinoterreux choisis parmi les oxydes de calcium, de strontium, de baryum et de magnésium, et facultativement aussi

j) jusqu'à 5 moles % d'un ou de plusieurs autres oxydes compatibles,

les compositions du premier et du second verre étant choisies de manière à exclure des compositions qui subissent une séparation de phases au cours de la fabrication de la fibre, celle-ci ayant un gradient d'indice de réfraction produit au cours de la fabrication par diffusion thermique entre le verre du coeur et le verre de la gaine et au moins en partie provoqué par le gradient de composition de l'oxyde de métal alcalinoterreux, fibre caractérisée en ce que les proportions des composants c), d), h) et le cas échéant i), sont telles qu'elles excluent un échange d'ions entre les ions du métal alcalinoterreux du verre du coeur et les ions du métal alcalin ou du métal alcalinoterreux du verre de la gaine au cours de la diffusion thermique.

5. Fibre optique selon la revendication 3 ou 4, caractérisée en outre en ce que le pourcentage molaire de l'oxyde de métal alcalin du verre de la gaine est égal ou inférieur à celui de l'oxyde de métal alcalin du verre du coeur.

6. Fibre optique selon la revendication 5, caractérisée en ce que les verres du coeur et de la gaine contiennent chacun un seul et même oxyde de métal alcalin.

7. Fibre optique selon la revendication 6, caractérisée en ce que l'oxyde de métal alcalin est l'oxyde de sodium.

8. Fibre optique selon l'une quelconque des revendications 3 à 7, caractérisée en ce que le

25 · **0 018 109** 26

pourcentage molaire de l'oxyde de métal alcalinoterreux du verre de la gaine est inférieur à celui de l'oxyde de métal alcalinoterreux du verre du coeur.

9. Fibre optique selon la revendication 8, caractérisée en ce que les verres du coeur de la gaine contiennent chacun un seul et même oxyde de métal alcalinoterreux.

10. Fibre optique selon la revendication 8, caractérisée en ce que le verre du coeur contient un seul oxyde de métal alcalinoterreux et le verre de la gaine ne contient pratiquement pas d'oxyde de métal alcalinoterreux.

11. Fibre optique selon l'une quelconque des revendications précédentes, caractérisée en ce que le verre du coeur contient:

55 à 65 moles % de silice, 10 à 20 moles d'oxyde borique, 14 à 25 moles % d'oxyde de sodium, 2 à 11 moles % d'un oxyde de métal alcalinoterreux choisi parmi les oxydes de calcium, de strontium et de baryum, et jusqu'à 5 moles % d'un ou de plusieurs autres oxydes compatibles.

12. Fibre optique selon l'une quelconque des revendications précédentes, caractérisée en ce que le verre du coeur contient 57 à 61 moles % de silice, 14 à 16,5 moles % d'oxyde borique, 19 à 22 moles % d'oxyde de sodium, 3 à 8 moles % d'oxyde de baryum et jusqu'à 5 moles % d'un ou de plusieurs autres oxydes compatibles.

13. Fibre optique selon l'une quelconque des revendications précédentes, caractérisée en ce que le verre de la gaine contient 55 à 65 moles % de silice, 10 à 20 moles % d'oxyde borique, 19 à 25 moles % d'oxyde de sodium et jusqu'à 5 moles % d'un ou de plusieurs autres oxydes compatibles, à l'exclusion d'oxydes de métaux alcalinoterreux.

14. Fibre optique selon l'une quelconque des revendications précédentes, caractérisée en ce que le verre de la gaine contient 59 à 63 moles % de silice, 17 à 19 moles % d'oxyde borique, 19 à 22 moles % d'oxyde de sodium et jusqu'à 5 moles % d'un ou de plusieurs autres oxydes compatibles, à l'exlusion d'oxydes de métaux alcalinoterreux.

15. Fibre optique selon l'une quelconque des revendications précédentes, caractérisée en ce que le verre de la gaine contient jusqu'à 3 moles % d'alumine et le verre du coeur ne contient pas d'alumine.

**Patentansprüche**

1. Optische Faser mit abgestuftem Index mit einem Gesamteinsatzverlust von weniger als 20 dB/km mit einem Kern aus einem Glas, das ein Alkalimetalloxid, ein Erdalkalimetalloxid, Siliciumdioxid und Boroxid enthält, und einem Überzug aus einem Glas, das ein Alkalimetalloxid, Boroxid und Siliciumdioxid enthält, wobei der Kern einen Brechungsindex hat, der um mindestens 1 % höher ist als derjenige des Überzugs, wobei das Kernglas und das Überzugsglas beide bis zu 5 Mol-% andere kompatible Oxide und keineweiteren Komponenten enthalten und beide Glaszusammensetzungen so gewählt werden, daß Zusammensetzungen ausgeschlossen sind, die einer Phasentrennung oder Entglasung unterliegen, wobei die Faser eine abgestufte Brechungsindexverteilung hat, hervorgerufen durch eine Wärmebehandlung, die einen thermischen Diffusionsprozeß zwischen dem Kern und dem Überzug induziert, dadurch gekennzeichnet, daß die Glaszusammensetzungen so sind, daß in dem thermischen Diffusionsprozeß eine Nettowanderung von Erdalkalimetallionen aus dem Kern in den Überzug auftritt und keine Wanderung von Erdalkalimetallionen oder Alkalimetallionen aus dem Überzug in den Kern' auftritt.

2. Optische Glasfaser mit abgestuftem Index mit einem Gesamteinsatzverlust von weniger als 20 dB/km, die einen Kern einen Überzug aufweist, wobei der Kern hergestellt ist aus einem ersten Glas, das besteht aus
a) Siliciumdioxid,
b) Boroxid,
c) einem oder mehr Alkalimetalloxiden, ausgewählt aus der Gruppe Natriumoxid und Kaliumoxid,
d) einem oder mehr Erdalkalimetalloxiden, ausgewählt aus der Gruppe Calciumoxid, Strontiumoxid und Bariumoxid, und gegebenenfalls
e) bis zu 5 Mol-% einem oder mehr anderen kompatiblen Oxiden,
wobei der Überzug gebildet ist aus einem zweiten Glas mit einem Brechungsindex, der um mindestens 1 % niedriger ist als derjenige des ersten Glases und das besteht aus
f) Siliciumdioxid,
g) Boroxid,
h) einem oder mehr Alkalimetalloxiden, ausgewählt aus der Gruppe Natriumoxid und Kaliumoxid, und gegebenenfalls
i) einem oder mehr Erdalkalimetalloxiden, ausgewählt aus der Gruppe Calciumoxid, Strontiumoxid, Bariumoxid und Magnesiumoxid, sowie gegebenenfalls
j) bis zu 5 Mol-% einem oder mehr anderen kompatiblen Oxiden,
wobei die erste und die zweite Glaszusammensetzung so gewählt werden, daß Zusammensetzungen ausgeschlossen sind, die während der Herstellung der optischen Faser einer Phasentrennung oder Entglasung unterliegen, wobei die Faser eine Gradation des Brechungsindex aufweist, die entsteht durch thermische Diffusion zwischen dem ersten Glas und dem zweiten Glas und mindestens teilweise hervorgerufen wird druch einen Zusammensetzungsgradienten an Erdalkalimetalloxid, dadurch gekennzeichnet, daß der Molprozentsatz an Alkalimetalloxid in dem Überzug gleich oder geringer ist als der Molprozentsatz an Alkalimetalloxid in dem Kern und daß der Molprozentsatz an Erdalkalimetalloxid in dem Kern größer ist als der Molprozentsatz an Erdalkalimetalloxid in dem Überzug.

3. Optische Glasfaser mit abgestuftem Index nach Anspruch 1 oder 2, dadurch gekennzeichnet, daß der Kern aus einem Glas gebildet ist, das besteht aus

a) 55 bis 65 Mol-% Siliciumdioxid,

b) 10 bis 20 Mol-% Boroxid,

c) einem oder mehr Alkalimetalloxiden, ausgewählt aus der Gruppe Natriumoxid und Kaliumoxid,

d) bis zu 20 Mol-% einem oder mehr Erdalkalimetalloxiden, ausgewählt aus der Gruppe Calciumoxid, Strontiumoxid und Bariumoxid, und gegenbenenfalls

e) bis zu 5 Mol-% einem oder mehr anderen kompatiblen Oxiden,

und daß der Überzug gegildet ist aus einem zweiten Glas, das besteht aus

f) 55 bis 65 Mol-% Siliciumdioxid,

g) 10 bis 20 Mol-% Boroxid,

h) einem oder mehr Alkalimetalloxiden, ausgewählt aus der Gruppe Natriumoxid und Kaliumoxid, und gegebenenfalls

i) einem oder mehr Erdalkalimetalloxiden, ausgewählt aus der Gruppe Calciumoxid, Strontiumoxid, Bariumoxid und Magnesiumoxid, sowie gegebenenfalls

j) bis zu 5 Mol-% einem oder mehr anderen kompatiblen Oxiden.

4. Optische Glasfaser mit abgestuftem Index mit einem Gesamteinsatzverlust von weniger als 20 dB/km, die einen Kern und einem Überzug aufweist, wobei der Kern gebildet ist aus einem ersten Glas, das besteht aus

a) 55 bis 65 Mol-% Siliciumdioxid,

b) 10 bis 20 Mol-% Boroxid,

c) einem oder mehr Alkalimetalloxiden, ausgewählt aus der Gruppe Natriumoxid und Kaliumoxid,

d) bis zu 20 Mol-% einem oder mehr Erdalkalimetalloxiden, ausgewählt aus der Gruppe Calciumoxid, Strontiumoxid und Bariumoxid, und gegebenenfalls

e) bis zu 5 Mol-% einem oder mehr anderen kompatiblen Oxiden, und der Überzug gebildet ist aus einem zweiten Glas mit einem Brechungsindex, der um mindestens 1 % niedriger ist als derjenige des ersten Glases, und das besteht aus

f) 55 bis 65 Mol-% Siliciumdioxid,

g) 10 bis 20 Mol-% Boroxid,

h) einem oder mehr Alkalimetalloxiden, ausgewählt aus der Gruppe Natriumoxid und Kaliumoxid, und gegebenenfalls

i) einem oder mehr Alkalimetalloxiden, ausgewählt aus der Gruppe Calciumoxid, Strontiumoxid, Bariumoxid und Magnesiumoxid, sowie gegebenenfalls

j) bis zu etwa 5 Mol-% einem oder mehr anderen kompatiblen Oxiden,

wobei die erste Glaszusammensetzung und die zweite Glaszusammensetzung so gewählt werden, daß Zusammensetzungen ausgeschlossen sind, die während der Herstellung der optischen Faser einer Phasentrennung unterliegen, wobei die Faser eine Gradation des Brechungsindex aufweist, die während der Herstellung entsteht durch die thermische Diffusion zwischen dem Kernglas und dem Überzugsglas, die mindestens teilweise hervorgerufen wird durch den Zusammensetzungsgradienten an Erdalkalimetalloxid, dadurch gekennzeichnet, daß die Mengenanteile der Komponenten (c), (d), (h) und, falls vorhanden, (i) so sind, daß ein Ionenaustausch zwischen Erdalkalimetallionen in dem Kernglas und Alkalimetall oder Erdalkalimetallionen in dem Überzugsglas während der thermischen Diffusion ausgeschlossen ist.

5. Optische Faser nach Anspruch 3 oder 4, dadurch gekennzeichnet, daß der Molprozentsatz an Alkalimetalloxid in dem Überzugsglas gleich oder geringer ist als der Molprozentsatz an Alkalimetalloxid in dem Kernglas.

6. Optische Faser nach Anspruch 5, dadurch gekennzeichnet, daß das Kernglas und das Überzugsglas jeweils ein wechselseitig identisches einziges Alkalimetalloxid enthalten.

7. Optische Faser nach Anspruch 6, dadurch gekennzeichnet, daß es sich bei dem wechselseitig identischen Alkalimetalloxid um Natriumoxid handelt.

8. Optische Faser nach einem der Ansprüche 3 bis 7, dadurch gekennzeichnet, daß der Molprozentsatz an Erdalkalimetalloxid in dem Überzugsglas geringer ist als der Molprozentsatz an Erdalkalimetalloxid in dem Kernglas.

9. Optische Faser nach Anspruch 8, dadurch gekennzeichnet, daß das Kernglas und das Überzugsglas jeweils ein wechselseitig identisches einziges Erdalkalimetalloxid enthalten.

10. Optische Faser nach Anspruch 8, dadurch gekennzeichnet, daß das Kernglas ein einziges Erdalkalimetalloxid enthält und daß das Überzugsglas praktisch kein Erdalkalimetalloxid enthält.

11. Optische Faser nach irgendeinem vorhergehenden Anspruch, dadurch gekennzeichnet, daß das Kernglas enthält: 55 bis 65 Mol-% Siliciumdioxid, 10 bis 20 Mol-% Boroxid, 14 bis 25 Mol-% Natriumoxid, 2 bis 11 Mol-% eines Erdalkalimetalloxids, ausgewählt aus der Gruppe Calciumoxid, Strontiumoxid und Bariumoxid, und bis zu 5 Mol-% eines oder mehr andere kompatible Oxide.

12. Optische Faser nach einem vorhergehenden Anspruch, dadurch gekennzeichnet, daß das Kernglas enthält: 57 bis 61 Mol-% Siliciumdioxid, 14 bis 16,5 Mol-% Boroxid, 19 bis 22 Mol-% Natriumoxid, 3 bis 8 Mol-% Bariumoxid und bis zu 5 Mol-% eines oder mehr andere kompatible Oxide.

13. Optische Faser nach einem vorhergehenden Anspruch, dadurch gekennzeichnet, daß das Überzugsglas enthält: 55 bis 65 Mol-% Siliciumdioxid, 10 bis 20 Mol-% Boroxid, 19 bis 25 Mol-% Natriumoxid und bis zu 5 Mol-% eines oder mehr andere kompatible Oxide ausschließlich der Erdalkalimetalloxide.

14. Optische Faser nach einem vorhergehenden Anspuch, dadurch gekennzeichnet, daß das Überzugsglas enthält: 59 bis 63 Mol-% Siliciumdioxid, 17 bis 19 Mol-% Boroxid, 19 bis 22 Mol-% Natriumoxid und bis zu 5 Mol-% eines oder mehr andere kompatible Oxide ausschließlich der Erdalkalimetalloxide.

15. Optische Faser nach einem vorhergehenden Anspruch, dadurch gekennzeichnet, daß das Überzugsglas bis zu 3 Mol-% Aluminiumoxid enthält und daß das Kernglas kein Aluminiumoxid enthält.

Fig.1

Fig. 2

$\delta_n = 0.001$

Fig. 3

Fig.4

Fig.5

Fig. 6 (a)

Fig. 6 (b)

Fig.7